# EUROPÄISCHE PATENTANMELDUNG

(11) **EP 2 261 850 A2**
(43) Veröffentlichungstag der Anmeldung: **15.12.2010**
(21) Anmeldenummer: 10178170.6
(22) Anmeldetag: 17.10.2000
(51) Int. Cl.: G06Q 30/00

(54) **Verfahren und System zur Vermittlung von Anbietern an Interessenten**

(62) Teilanmeldung aus: 00965714.9
(71) Anmelder: Swisscom AG, 3050 Bern (CH)
(72) Erfinder: Ritter, Rudolf, 3052, Zollikofen (CH)
(74) Vertreter: BOVARD AG

(57) **Zusammenfassung**

Verfahren und System zur Vermittlung von Anbietern an Interessenten, in welchen für eine Vielzahl von Anbietern jeweils Anbieterprofildaten (111) und zugeordnete Angebotsdaten (112) in einem vernetzten Anbietervermittlungsserver (1) gespeichert werden, in welchen gewisse der Anbieterprofildaten (111) und/oder Angebotsdaten (112) durch den Anbietervermittlungsserver (1) an Kommunikationsendgeräte (3) der Interessenten übermittelt werden, die mittels diesen Kommunikationsendgeräten (3) über ein Kommunikationsnetz (2) auf den Anbietervermittlungsserver (1) zugreifen, wobei sich mindestens gewisse der Anbieter jeweils mittels eines Mobilendgeräts (4) beim Anbietervermittlungsserver (1) registrieren, wobei durch Registriermittel (45) im Mobilendgerät (4) des betreffenden Anbieters automatisch ein Registrierungsbeleg generiert und über ein Kommunikationsnetz (2) an den Anbietervermittlungsserver (1) übermittelt wird, welcher Registrierungsbeleg eine Anbieteridentifizierung umfasst, die einem Identifizierungsmodul (41) des Mobilendgeräts (4) entnommen wird, und welcher Registrierungsbeleg den Wert der aktuellen geografischen Position des Mobilendgeräts (4) umfasst, die durch Positionsbestimmungsmittel (44) des Mobilendgeräts (4) bestimmt wird, und wobei die Anbieteridentifizierung und der Wert der aktuellen geografischen Position im Anbietervermittlungsserver (1) als Teil der Anbieterprofildaten (111) des betreffenden Anbieters gespeichert werden.

## Beschreibung

Die vorliegende Erfindung betrifft ein Verfahren und ein System zur Vermittlung von Anbietern an Interessenten. Insbesondere betrifft die vorliegende Erfindung ein Verfahren und ein System, in welchen für eine Vielzahl von Anbietern jeweils Anbieterprofildaten und zugeordnete Angebotsdaten in einem vernetzten Anbietervermittlungsserver gespeichert werden und gewisse der Anbieterprofildaten und/oder Angebotsdaten durch den Anbietervermittlungsserver an Kommunikationsendgeräte der Interessenten übermittelt werden, die mittels diesen Kommunikationsendgeräten über ein Kommunikationsnetz auf den Anbietervermittlungsserver zugreifen.

Insbesondere im Zusammenhang mit dem sich schnell ausdehnenden Internet und der sich ständig verbreitenden Mobilfunktelefonie wurden Dienste für die Vermittlung von Anbietern von Dienstleistungen, Informationen und/oder Produkten an Interessenten immer wichtiger. Interessenten mit Kommunikationsendgeräten können beispielsweise mittels Suchmaschinen im Internet die Seiten von Anbietern auffinden, deren Anbieterprofil und/oder angebotene Dienstleistungen, Informationen und/oder Produkte eine Übereinstimmung mit spezifizierten Suchbegriffen aufweisen. In anderen bekannten computergestützten Lösungen zur Vermittlung von Anbietern an Interessenten kann ein Interessent mittels eines Kommunikationsendgeräts und darauf laufenden Softwareprogrammen, beispielsweise ein sogenannter Browser, direkt auf eine vernetzte Anbieterdatenbank zugreifen und Anbieterprofildaten und/oder Angebotsdaten beziehen, die Anbieter betreffen, deren Anbieterprofildaten und/oder Angebotsdaten eine Übereinstimmung mit spezifizierten Suchbegriffen aufweisen. Die Anbieterprofildaten von Anbietern von Dienstleistungen, Informationen und/oder Produkten, die von einem Interessenten nur vor Ort beim Anbieter bezogen werden können, umfassen entsprechende Adressinformationen des Anbieters, beispielsweise die Adresse einer Verkaufs- oder Dienststelle des betreffenden Anbieters (POS, Point of Sale; POP, Point of Presence).

Insbesondere für mobile Interessenten mit Mobilendgeräten werden immer häufiger sogenannte ortsabhängige oder ortsspezifische Dienste angeboten, in welchen die aktuelle geografische Position eines Interessenten an eine Zentralstelle übermittelt wird und durch die Zentralstelle dem betreffenden Interessenten Informationen übermittelt werden, die speziell für das durch die aktuelle geografische Position definierte geografische Gebiet relevant sind.

Es ist eine Aufgabe dieser Erfindung, ein neues Verfahren und ein neues System zur Vermittlung von Anbietern an Interessenten vorzuschlagen, welche insbesondere auch die Vermittlung von mobilen Anbietern ermöglichen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass sich mindestens gewisse der Anbieter jeweils mittels eines Mobilendgeräts bei einem Anbietervermittlungsserver registrieren, wobei durch Registriermittel im Mobilendgerät des betreffenden Anbieters automatisch ein Registrierungsbeleg generiert und über ein Kommunikationsnetz an den Anbietervermittlungsserver übermittelt wird, welcher Registrierungsbeleg eine Anbieteridentifizierung umfasst, die einem Identifizierungsmodul des Mobilendgeräts entnommen wird, und welcher Registrierungsbeleg den Wert der aktuellen geografischen Position des Mobilendgeräts umfasst, die durch Positionsbestimmungsmittel des Mobilendgeräts bestimmt wird, und dass die Anbieteridentifizierung und der Wert der aktuellen geografischen Position im Anbietervermittlungsserver als Teil der Anbieterprofildaten des betreffenden Anbieters gespeichert werden. Der Vorteil dieser Lösung besteht insbesondere darin, dass Anbieter, insbesondere mobile Anbieter, ihren aktuellen Standort auf einfachste Weise, ohne beispielsweise dazu Daten eingeben zu müssen, an den Anbietervermittlungsserver übermitteln können und somit von Interessenten, die die Dienste des Anbietervermittlungsservers benutzen, lokalisiert werden können.

In einer Ausführungsvariante wird der an den Anbietervermittlungsserver übermittelte Wert der aktuellen geografischen Position des Mobilendgeräts im Mobilendgerät gespeichert, wird der gespeicherte Wert periodisch mit dem Wert der durch die Positionsbestimmungsmittel erneut bestimmten aktuellen geografischen Position des Mobilendgeräts verglichen, und ab einem vordefinierten Distanzwert zwischen dem gespeicherten und dem erneut bestimmten Wert der geografischen Position, wird der Wert der erneut bestimmten geografischen Position an den Anbietervermittlungsserver übermittelt und im Mobilendgerät gespeichert. Diese Ausführungsvariante hat den Vorteil, dass die geografische Position eines (mobilen) Anbieters im Anbietervermittlungsserver automatisch aktualisiert wird, ohne dass der betreffende Anbieter sich darum zu kümmern braucht.

In einer Ausführungsvariante wird zusätzlich zum Wert der aktuellen geografischen Position des Mobilendgeräts eine Angabe über die zeitliche Gültigkeit dieses Werts an den Anbietervermittlungsserver übermittelt und dort gespeichert. Diese Ausführungsvariante hat den Vorteil, dass Anbieter, die sich beispielsweise nur für eine begrenzte Zeitdauer an einer bestimmten geografischen Position aufhalten, ihre zeitlich begrenzte Verfügbarkeit dem Anbietervermittlungsserver gleich bei ihrer Registrierung mitteilen können.

In einer Ausführungsvariante wird beim Zugriff durch Interessenten auf den Anbietervermittlungsserver jeweils der Wert der aktuellen geografischen Position des betreffenden Interessenten an den Anbietervermittlungsserver übermittelt, und die Anbieterprofildaten und/oder Angebotsdaten, die durch den Anbietervermittlungsserver an das Kommunikationsendgerät des betreffenden Interessenten übermittelt werden, werden durch den Anbietervermittlungsserver unter Berücksichtigung des Werts der aktuellen geografischen Position des betreffenden Interessenten und der gespeicherten Werte der geografischen Positionen der Anbieter bestimmt. Diese Ausführungsvariante hat den Vorteil, dass die Anbieter, respektive deren Anbieterprofildaten, beispielsweise deren aktueller Standort, und/oder Angebotsdaten durch den Anbietervermittlungsserver standortspezifisch an die Interessenten vermittelt werden können, so dass den Interessenten beispielsweise diejenigen Anbieter einer gewünschten Dienstleistung und/oder Information und/oder eines gewünschten Produkts vermittelt werden können, die sich in der Nähe des Interessenten befinden.

In einer Ausführungsvariante werden die Registriermittel jeweils in Form eines ausführbaren Programms in das Mobilendgerät geladen, wird im Mobilendgerät mittels kryptographischen Mitteln aus Kenndaten des ausführbaren Programms und/oder aus dem Programmcode des ausführbaren Programms ein digitales Zertifikat generiert und abgespeichert, und zur Detektion von Manipulationen am ausführbaren Programm wird das digitale Zertifikat durch die kryptographischen Mittel erneut bestimmt und die Übereinstimmung des erneut bestimmten digitalen Zertifikats mit dem abgespeicherten digitalen Zertifikat überprüft. Der Vorteil, die Registriermittel als ausführbares Programm dynamisch in das Mobilendgerät zu laden, besteht darin, dass sich Anbieter beim Anbietervermittlungsserver mit der jeweils aktuellen Version der Registriermittel registrieren können, ohne sich vorher bei einem POS oder POP zu präsentieren oder ihre Mobilendgeräte selber mit vorgängig bezogenen zusätzlichen Komponenten ausrüsten zu müssen.

Nachfolgend wird eine Ausführung der vorliegenden Erfindung anhand eines Beispieles beschrieben. Das Beispiel der Ausführung wird durch folgende einzige beigelegte Figur illustriert:

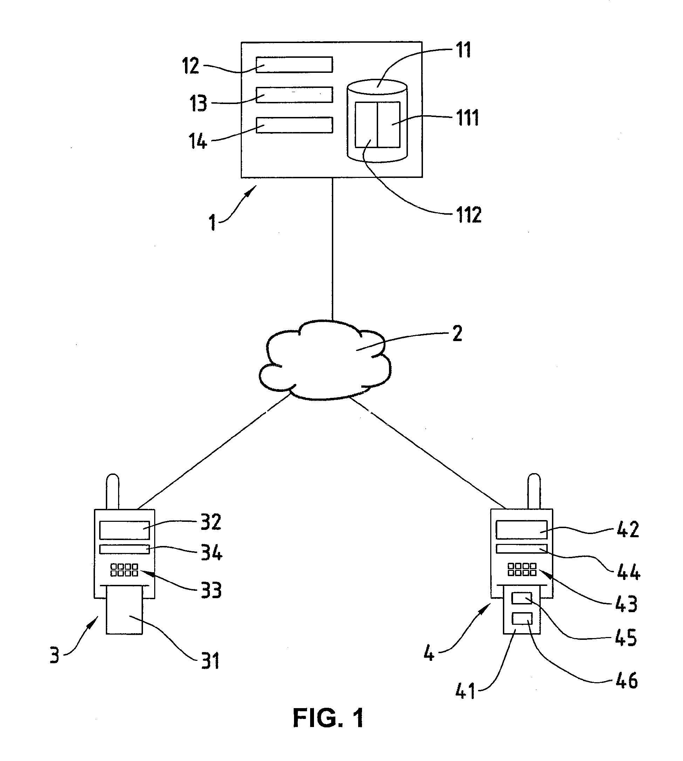

Figur 1 zeigt ein Blockdiagramm, welches schematisch einen Anbietervermittlungsserver darstellt, der über ein Kommunikationsnetz mit einem Kommunikationsendgerät eines Interessenten und einem Mobilendgerät eines Anbieters verbunden ist.

In der Figur 1 bezieht sich die Bezugsziffer 1 auf einen Anbietervermittlungsserver, der über eine Anbieterdatenbank 11 verfügt. Der Anbietervermittlungsserver 1 und die Anbieterdatenbank 11 sind beispielsweise auf einem gemeinsamen Computer, zum Beispiel ein herkömmlicher vernetzbarer Server-Computer, oder auf verschiedenen miteinander verbundenen Computers ausgeführt. In der Anbieterdatenbank 11 sind für eine Vielzahl von Anbietern von Dienstleistungen, Informationen und/oder Produkte jeweils Anbieterprofildaten 111 und diesen Anbieterprofildaten 111 zugeordnete Angebotsdaten 112 gespeichert. Die Anbieterprofildaten 111 und die Angebotsdaten 112 eines Anbieters sind beispielsweise über eine gemeinsame Anbieteridentifizierung verknüpft. Als Anbieteridentifizierung kann beispielsweise eine Teilnehmeridentifizierung für ein Kommunikationsnetz verwendet werden, zum Beispiel eine sogenannte International Mobile Subscriber Identity (IMSI), die insbesondere zur Identifizierung von Teilnehmern in einem Mobilfunknetz verwendet wird. Die Anbieteridentifizierung kann aber auch eine andere eindeutige Kennung des Anbieters sein, beispielsweise eine Identifizierung für Finanzdienstleistungen, biometrische Merkmale des Benutzers oder eine Rufnummer des Anbieters, beispielsweise eine MSISDN-Nummer (Mobile Subscriber ISDN) oder eine Netzwerkadresse, zum Beispiel eine URL-Adresse (Uniform Resource Locator). Die Anbieterprofildaten 111 eines Anbieters umfassen Informationen betreffend diesen Anbieter, beispielsweise die erwähnte Anbieteridentifizierung, Adressinformationen von Verkaufs- und/oder Dienststellen, Wegweisungsdaten zu den Verkaufs- und/oder Dienststellen, Korrespondenzadressen, Telefonnummer(n), zum Beispiel MSISDN-Nummern, Bewertungen des Anbieters, die beispielsweise durch andere Interessenten oder als Selbstbewertung durch den Anbieter selber gemacht wurden, und/oder die geografische Position(en) des Anbieters. Die Angebotsdaten 112 eines Anbieters umfassen Informationen über Dienstleistungen, Informationen und/oder Produkte, die vom betreffenden Anbieter angeboten werden, beispielsweise die erwähnte Anbieteridentifizierung sowie Bezeichnungen, Beschreibungen, Bewertungen durch Interessenten, Bestellnummern, technische Daten, Preisangaben, Bonuspunkte, Lieferbedingungen und/oder Verfügbarkeitsangaben sowie Angaben über die Anzahl bereits verkaufter Dienstleistungen, Informationen und/oder Produkte. Die Anbieterprofildaten 111 und die Angebotsdaten 112 können beispielsweise durch den Anbietervermittlungsserver 1 in mehrere Sprachen übersetzt und in der Anbieterdatenbank 11 mehrsprachig abgespeichert werden, so dass Interessenten Daten in der von Ihnen (automatisch gemäss Benutzerprofil oder manuell) gewählten Sprache aus der Anbieterdatenbank 11 beziehen können.

Wie in der Figur 1 gezeigt wird, können Daten zwischen dem Anbietervermittlungsserver 1 und den Kommunikationsendgeräten 3, 4 über das schematisch dargestellte Kommunikationsnetz 2 ausgetauscht werden. Das Kommunikationsnetz 2 umfasst ein Mobilfunknetz, beispielsweise ein GSM- (Global System for Mobile Communication) oder UMTS-Netz (Universal Mobile Telephone System) oder ein ähnliches Mobilfunknetz oder ein satellitenbasiertes Mobilnetz. Im Kommunikationsnetz 2 können auch spezielle Datendienste verfügbar sein, beispielsweise der GPRS-Dienst (General Packet Radio Service) oder andere Datendienste. Das Kommunikationsnetz 2 umfasst zum Beispiel auch Festnetze, beispielsweise das Internet, (TV-)Kabelnetze, das öffentliche geschaltete Telefonnetz (PSTN), ISDN-Netze (Integrated Services Digital Network) oder PLC-Kommunikationsetze (Power Line Communication). Das Kommunikationsnetz 2 kann auch vernetzte Zugangsterminals umfassen, die mit kontaktlosen Geräteschnittstellen ausgerüstet sind, beispielsweise Funkschnittstellen wie Bluetooth oder Infrarotschnittstellen wie IrDA, über welche die Kommunikationsendgeräte 3, 4, die mit entsprechenden kontaktlosen Geräteschnittstellen ausgerüstet sind, mit dem Anbietervermittlungsserver 1 kommunizieren können. An dieser Stelle soll auch angeführt werden, dass der Datenaustausch zwischen dem Anbietervermittlungsserver 1 und den Kommunikationsendgeräten 3, 4 über das Kommunikationsnetz 2 unter Verwendung von bekannten Sicherheitsmechanismen erfolgen kann, beispielsweise unter Zuhilfenahme von SSL-Diensten (Secure Socket Layer), WAP-Sicherheitsdiensten (Wireless Application Protocol) oder PKI-Diensten (Private Key Infrastructure).

Das Kommunikationsendgerät 3 ist zum Beispiel ein Personal Computer mit Modem, ein ISDN-Endgerät, ein kommunikationsfähiger Laptop- oder Palmtop-Computer, beispielsweise ein PDA (Personal Digital/Data Assistant), ein sogenannter "Wearable Computer" oder ein Mobilfunk- oder Drahtlostelefon. Das Kommunikationsendgerät 4 ist ein Mobilendgerät 4, zum Beispiel ein kommunikationsfähiger Laptop- oder Palmtop-Computer, beispielsweise ein PDA (Personal Digital/Data Assistant) oder ein Drahtlos- oder Mobilfunktelefon. Wie in der Figur 1 illustriert wird, umfassen die Kommunikationsendgeräte 3 und 4 jeweils eine Anzeige 32, 42, Bedienungselemente 33, 43, sowie ein Identifizierungsmodul 31, 41, beispielsweise eine entfernbare Chipkarte, insbesondere eine SIM-Karte (Subscriber Identification Module).

Die in der Figur 1 dargestellten Kommunikationsendgeräte 3 und 4 umfassen zudem Positionsbestimmungsmittel 34, 44 zur Bestimmung der aktuellen geografischen Position des Kommunikationsendgeräts 3, 4. Die Positionsbestimmungsmittel 34, 44 umfassen zum Beispiel Module für ein terrestrisches oder ein satellitenbasiertes Positionierungssystem, beispielsweise einen GPS-Empfänger (Global Positioning System), zum Beispiel in der Form eines integrierten GPS-Chips, oder ein programmiertes Softwaremodul, welches die aktuelle geografische Position aus der Netzinfrastruktur des betreffenden Kommunikationsnetzes bezieht oder welches ein Triangulationsverfahren ausführt, um die aktuelle geografische Position auf der Basis von mehreren externen Positionen zu bestimmen, beispielsweise Koordinaten von Basisstationen, die vom betreffenden Kommunikationsendgerät 3, 4 empfangbar sind. Es ist auch möglich, dass die Positionsbestimmungsmittel 34, 44 eine manuelle Eingabe der geografischen Position durch den Benutzer unterstützen, beispielsweise können dabei vom Benutzern spezifizierte Landmarken, zum Beispiel der Name eines bekannten Gebäudes oder einer Strassenkreuzung, eingegeben werden und durch die Positionsbestimmungsmittel 34, 44 automatisch in die entsprechenden geografischen Koordinaten umgerechnet werden.

Softwareprogramme können in den Kommunikationsendgeräten 3, 4 auf einem Prozessor ausgeführt werden, der fest im Kommunikationsendgerät 3, 4 installiert ist oder der auf dem Identifizierungsmodul 31, 41 des Kommunikationsendgeräts 3, 4 installiert ist. Die Aufteilung von ausführbaren Softwareprogrammen und von zu speichernden Datenelementen auf festinstallierte Speicher und Prozessoren in den Kommunikationsendgeräten 3, 4, respektive auf Speicher und Prozessoren der aus den Kommunikationsendgeräten 3, 4 entfernbaren Identifizierungsmodule 31, 41, kann beispielsweise gemäss der vom European Telecommunications Standards Institute (ETSI) definierten Spezifikationen der Mobile Station Application Execution Environment (MExE, GSM 02.57 und GSM 03.57), dem sogenannten MExE-Bereich, vorgenommen werden, wobei beispielsweise benutzerspezifische Daten und Sicherheitsfunktionen sowie Schlüssel und Applets für bestimmte Anwendungen im Speicher der Identifizierungsmodule 31, 41 gespeichert werden.

Die Kommunikationsendgeräte 3, 4 umfassen zudem nicht dargestellte Anfragemodule, um auf der Applikationsebene mit dem Anbietervermittlungsserver 1 zu kooperieren, der für diesen Zweck mit einem entsprechenden Zugangsmodul 14 ausgeführt ist. Die Anfragemodule sind programmierte Softwaremodule, beispielsweise Datenbankabfrageprogramme oder sogenannte Browser-Programme, zum Beispiel basierend auf WAP (Wireless Application Protocol) oder i-mode-Diensten. Mittels dieser programmierten Softwaremodule können die Kommunikationsendgeräte 3, 4 auf Applikationsdaten der Anbietervermittlungsserver 1 zugreifen und beispielsweise auf der Grundlage von HTML-Files (Hyper Text Markup Language), HDML-Files (Handheld Device Markup Language), WML-Files (Wireless Markup Language) oder anderen Datenformaten navigieren und Datenobjekte beziehen. Die Anfragemodule können Benutzern auch die Suche nach gewünschten Datenobjekten basierend auf benutzerspezifischen Suchkriterien ermöglichen. Zudem ist es für Benutzer auch möglich mittels der Anfragemodule Bewertungen betreffend Anbieter und/oder angebotenen Dienstleistungen, Informationen und/oder Produkten einzugeben und an den Anbietervermittlungsserver 1 zu übermitteln, wo sie dem betreffenden Anbieter in der Anbieterdatenbank 11 als Teil der Anbieterprofildaten 111 oder Angebotsdaten 112 gespeichert werden. Die Bewertungen erfolgen beispielsweise hinsichtlich Qualität von Angeboten und Kundenbetreuung. Als Gegenleistung für Bewertungsdaten, die von einem Benutzer erhalten wurden, kann der Anbietervermittlungsserver 1 beispielsweise dem betreffenden Benutzer Geldbeträge oder Bonuspunkte gutschreiben, die später vom Benutzer als Zahlungsmittel eingesetzt werden können, oder der betreffende Benutzer wird vom Anbietervermittlungsserver 1 berechtigt an einer Lotterie teilzunehmen. Den Benutzern kann beispielsweise vom Anbietervermittlungsserver 1 auch ein geeignetes Anfragemodul, beispielsweise in Form eines ausführbaren Programms, zum Beispiel ein Applet, über das Kommunikationsnetz 2 in ihre Kommunikationsendgeräte 3, 4 geladen werden und dort im erwähnten MExE-Bereich gespeichert werden, beispielsweise in einem Speicher des Identifizierungsmoduls 31, 41.

Um sich beim Anbietervermittlungsserver 1 zu registrieren greift ein Anbieter beispielsweise mit seinem Mobilendgerät 4 auf den Anbietervermittlungsserver 1 zu, zum Beispiel mittels der erwähnten Anfragemodule über das Zugangsmodul 14 des Anbietervermittlungsservers 1, und lässt sich Registriermittel auf sein Mobilendgerät 4 übermitteln, beispielsweise in Form des im Anbietervermittlungsserver 1 gespeicherten ausführbaren Registrierprogramms 13, beispielsweise ein Applet. Die Registriermittel 45 werden im oben erwähnten MExE-Bereich des Mobilendgeräts 4, beispielsweise im Speicher des Identifizierungsmoduls 41, gespeichert.

Die Registriermittel 45 umfassen eine Datentabelle, in die der Anbieter seine Anbieterprofildaten und seine Angebotsdaten eingeben kann. Wenn der Anbieter die Registriermittel 45 aktiviert, das heisst das entsprechende ausführbare Programm startet, wird durch die Registriermittel 45 automatisch ein Registrierungsbeleg generiert und an den Anbietervermittlungsserver 1 übermittelt, beispielsweise nach vorgängiger Bestätigung durch den Anbieter, wo sie durch den Anbietervermittlungsserver 1, insbesondere durch das programmierte Anbieterregistriermodul 12, in der Anbieterdatenbank 11 gespeichert werden. Der Registrierungsbeleg umfasst die in der erwähnten Tabelle gespeicherten Anbieterprofildaten und Angebotsdaten des Anbieters sowie eine Anbieteridentifizierung des Anbieters und den Wert der aktuellen geografischen Position des Mobilendgeräts 4. Vorzugsweise ist die Anbieteridentifizierung in einem Speicher des Identifizierungsmoduls 41 gespeichert und wird durch die Registriermittel 45 direkt dem Identifizierungsmodul 41 entnommen. Der Wert der aktuellen geografischen Position des Mobilendgeräts 4, respektive des Anbieters, wird wie oben beschrieben durch die Positionsbestimmungsmittel 44 des Mobilendgeräts 4 bestimmt. Die Registriermittel 45 sind vorzugsweise so ausgeführt, dass sie verschiedene Positionsbestimmungsmittel 44 unterstützen können, das heisst bestimmte aktuelle geografische Positionswerte von verschiedenen Typen von Positionsbestimmungsmitteln 44 entgegennehmen können.

In einer Ausführungsvariante umfassen die Registriermittel 45 eine Positionsaktualisierungsfunktion. Durch die Positionsaktualisierungsfunktion wird der an den Anbietervermittlungsserver 1 übermittelte Wert der aktuellen geografischen Position im Mobilendgerät 4 gespeichert und der gespeicherte Wert periodisch mit dem Wert der durch die Positionsbestimmungsmittel 44 erneut bestimmten aktuellen geografischen Position des Mobilendgeräts 4 verglichen. Ab einem vordefinierten Distanzwert zwischen dem gespeicherten und dem erneut bestimmten Wert der geografischen Position, wird der Wert der erneut bestimmten geografischen Position durch die Positionsaktualisierungsfunktion an den Anbietervermittlungsserver 1 übermittelt und im Mobilendgerät 4 gespeichert. Die Übermittlung des erneut bestimmten Werts der geografischen Position durch die Positionsaktualisierungsfunktion an den Anbietervermittlungsserver 1 kann beispielsweise an die Bedingung geknüpft sein, dass vorgängig eine entsprechende Option durch den betreffenden Anbieter im Mobilendgerät 4 gesetzt wurde, zum Beispiel im Identifizierungsmodul 41, oder der betreffende Anbieter, auf Anfrage der Positionsaktualisierungsfunktion, eine entsprechende Bestätigung eingegeben hat. Durch die Positionsaktualisierungsfunktion wird die geografische Position des (mobilen) Anbieters, respektive dessen Mobilendgeräts 4, im Anbietervermittlungsserver 1 automatisch aktualisiert.

Es ist auch möglich, dass die Registriermittel 45 zusätzlich zum Wert der aktuellen geografischen Position des Mobilendgeräts 4 eine vom betreffenden Anbieter spezifizierte Angabe über die zeitliche Gültigkeit dieses Werts an den Anbietervermittlungsserver 1 übermittelt und dort gespeichert wird, beispielsweise eine Zeitdauer oder ein Verfallsdatum. Durch eine dafür vorgesehene Funktion des Anbietervermittlungsservers 1 kann der betreffende Standort des Anbieters, respektive der betreffende Anbieter (bei einem einzigen Standort), nach Ablauf der zeitlichen Gültigkeit in der Anbieterdatenbank 11 gelöscht oder deaktiviert werden.

Interaktionen zwischen einem Anbieter und den Registriermitteln 45 erfolgen mittels der Bedienungselemente 43 oder unter Verwendung eines Spracherkennungsmoduls mittels Sprachsteuerung, wobei das Spracherkennungsmodul beispielsweise im Mobilendgerät 4, zum Beispiel im erwähnten MExE-Bereich, beispielsweise auf dem Identifizierungsmodul 41, ausgeführt ist.

Im Anbietervermittlungsserver 1 werden durch ein programmiertes Marketingmodul, basierend auf den von Anbietern und Interessenten erhaltenen Informationen, beispielsweise Bewertungen, Bestellungen, Angebote und so weiter, automatisch und dynamisch Marketingdaten erstellt, die den Benutzern, insbesondere den Interessenten, als Abfrage-, Navigations-, Orientierungs- und Bestellhilfe dienen.

In einer Ausführungsvariante umfassen die Mobilendgeräte 4 kryptographische Mittel 46, die beispielsweise als programmiertes Softwaremodul ausgeführt sind, zum Beispiel als Applet. Die kryptographischen Mittel 46 werden beispielsweise bereits bei der Herstellung des Identifizierungsmoduls 41 als Teil des Kernel-Programms auf dem Identifizierungsmodul 41 gespeichert oder können später, beispielsweise durch Einführen des Identifizierungsmoduls 41 in ein dafür vorgesehenes Kartenterminal oder über die Luftschnittstelle (OTA, over the air), ins Mobilendgerät 4 geladen und dort gespeichert werden. Die kryptographischen Mittel 46 dienen zur Detektion von Manipulationen an Softwareprogrammen, insbesondere ausführbare Softwareprogramme, die beispielsweise über die Luftschnittstelle ins Mobilendgerät 4, insbesondere in den oben erwähnten MExE-Bereich, zum Beispiel auf das Identifizierungsmodul 41, geladen werden. Die kryptographischen Mittel 46 generieren, beispielsweise unter Verwendung einer Hash-Funktion, aus Kenndaten des betreffenden Softwareprogramms und/oder aus dem Programmcode des betreffenden Softwareprogramms ein digitales Zertifikat und speichern dieses Zertifikat im Mobilendgerät 4, beispielsweise in einem Speicher des Identifizierungsmoduls 41 ab. Die Kenndaten eines Softwareprogramms umfassen beispielsweise ein Datum, das die Aktualität des Softwareprogramms angibt, eine Versionenangabe des Softwareprogramms, die Grösse des Softwareprogramms, die Adresse des Transaktionsservers, von dem das betreffende Softwareprogramm geladen wurde, im Fall der Registriermittel 45 die Adresse des
Anbietervermittlungsservers 1, oder andere spezifische Parameter des betreffenden Softwareprogramms. Insbesondere um unrechtmässige Manipulationen am betreffenden Softwareprogramm zu detektieren, bestimmen die kryptographischen Mittel 46 das digitale Zertifikat zu einem späteren Zeitpunkt erneut, beispielsweise bei der Aktivierung des Mobilendgeräts 4 oder vor der Aktivierung des betreffenden Softwareprogramms, im Falle der Registriermittel 45 beispielsweise vor der Durchführung einer Registrierung. Die kryptographischen Mittel 46 überprüfen die Übereinstimmung des erneut generierten digitalen Zertifikats mit dem vorgängig abgespeicherten digitalen Zertifikat. Falls die digitalen Zertifikate nicht übereinstimmen wird das betreffende Softwareprogramm blockiert, im Falle der Registriermittel 45 werden beispielsweise die Registriermittel 45 blockiert, eine entsprechende Log-Datei erstellt und beispielsweise eine zuständige Zentralstelle alarmiert, zum Beispiel der Transaktionsserver, vom dem das betreffende Softwareprogramm geladen wurde, im Falle der Registriermittel 45 der Anbietervermittlungsserver 1.

In einer Ausführungsvariante wird beim Zugriff durch Interessenten auf den Anbietervermittlungsserver 1 jeweils der Wert der aktuellen geografischen Position des betreffenden Interessenten an den Anbietervermittlungsserver 1 übermittelt, und die Anbieterprofildaten 111 und/oder Angebotsdaten 112, die durch den Anbietervermittlungsserver 1 an das Kommunikationsendgerät 3 des betreffenden Interessenten übermittelt werden, werden durch den Anbietervermittlungsserver 1 unter Berücksichtigung des Werts der aktuellen geografischen Position des betreffenden Interessenten und der gespeicherten Werte der geografischen Positionen der Anbieter bestimmt. Diese Ausführungsvariante hat den Vorteil, dass die Anbieter, respektive deren Anbieterprofildaten, beispielsweise deren aktueller Standort, und/oder Angebotsdaten durch den Anbietervermittlungsserver 1 standortspezifisch an die Interessenten vermittelt werden können, so dass den Interessenten beispielsweise diejenigen Anbieter einer gewünschten Dienstleistung und/oder Information und/oder eines gewünschten Produkts vermittelt werden können, die sich in der Nähe des Interessenten befinden.

Um sich über Angebote eines bestimmten Anbieters zu informieren, um einen Anbieter zu finden, der bestimmte gewünschte Dienstleistungen, Informationen und/oder Produkte anbietet, und/oder um einen gewünschten Anbieter in einem bestimmten geografischen Gebiet, respektive in der Nähe der eigenen aktuellen geografischen Position zu finden, greift ein Interessent mit seinem Kommunikationsendgerät 3 auf den Anbietervermittlungsserver 1 zu, zum Beispiel mittels der erwähnten Anfragemodule des Kommunikationsendgeräts 3 über das Zugangsmodul 14 des Anbietervermittlungsservers 1. Zur Bestimmung eines Anbieters können vom Interessenten Anbieterprofildaten als Anfragekriterien spezifiziert und an den Anbietervermittlungsserver 1 übermittelt werden, beispielsweise der Name des Anbieters. Zur Bestimmung gewünschter Dienstleistungen, Informationen und/oder Produkte können vom Interessenten Angebotsdaten als Anfragekriterien spezifiziert und an den Anbietervermittlungsserver 1 übermittelt werden, beispielsweise die Bezeichnung eines gewünschten Angebots. Zur Bestimmung eines gewünschten Anbieters in einem bestimmten geografischen Gebiet können vom Interessenten geografische Positionsangaben als Anfragekriterien spezifiziert und an den Anbietervermittlungsserver 1 übermittelt werden. Zur Bestimmung eines gewünschten Anbieters in der Nähe der eigenen aktuellen geografischen Position wird die durch die Positionsbestimmungsmittel 34 bestimmte aktuelle geografische Position des Kommunikationsendgeräts 3, respektive des betreffenden Interessenten, vom erwähnten Anfragemodul des Kommunikationsendgeräts 3 automatisch als Anfragekriterium an den Anbietervermittlungsserver 1 übermittelt. Das Anfragemodul ist so eingerichtet, dass kombinierte Anfragekriterien spezifiziert und an den Anbietervermittlungsserver 1 übermittelt werden können. Das Anfragemodul ermöglicht dem Interessenten auch Anbieter und/oder Angebote auf der Anzeige 32 des Kommunikationsendgeräts 3 aufzulisten und daraus einzelne Anbieter und/oder Angebote mittels der Bedienungselemente 33, oder unter Verwendung eines Spracherkennungsmoduls mittels Sprachsteuerung zu selektieren. Zusätzlich zu Anbieterprofildaten betreffend einen selektierten, respektive gefundenen Anbieter, und Angebotsdaten betreffend ein selektiertes, respektive gefundenes Angebot können dem Interessenten durch den Anbietervermittlungsserver 1 auch Wegleitungsdaten auf sein Kommunikationsendgerät 3 übermittelt werden. Die Wegleitungsdaten umfassen beispielsweise Bildobjekte mit graphischen Kartendarstellungen des Wegs vom Standort des Interessenten, gemäss der übermittelten geografischen Position des Interessenten, zum Standort des Anbieters, gemäss der in der Anbieterdatenbank 11 gespeicherten aktuellen goegrafischen Position des betreffenden Anbieters. Interessenten können selektierte Angebote, das heisst selektierte Dienstleistungen, Informationen und/oder Produkte, direkt über den Anbietervermittlungsserver 1 bestellen.

Zur Verrechnung von kostenpflichtigen Diensten, die vom Anbietervermittlungsserver 1 für einen Interessenten oder einen Anbieter ausgeführt werden, sind verschiedene Verrechnungs- und Bezahlungsvarianten möglich. Die Bestimmung der Kosten (Rating) kann beispielsweise im oben erwähnten MExE-Bereich vorgenommen werden, zum Beispiel mittels programmierter Softwaremodule, die mit Verarbeitungsmitteln ausgeführt werden, die fest im Kommunikationsendgerät 3, 4 oder im Identifizierungsmodul 31, 41 implementiert sind. Die durch diese programmierten Softwaremodule bestimmten Kosten werden in Billingbelege verpackt und über das Kommunikationsnetz 2 an den Anbietervermittlungsserver 1 oder an eine Clearingstelle übermittelt, beispielsweise über geeignete Sicherheitskanäle, zum Beispiel unter Verwendung der oben angeführten Sicherheitsmechanismen. Bei der Generierung eines Billingbeleges werden neben den zu bezahlenden Kosten auch eine Identifizierung des betreffenden Benutzers in den Billingbeleg eingefügt, also eine Identifizierung des betreffenden Interessenten oder Anbieters, wobei, insbesondere im Zusammenhang mit Bestellungen von Dienstleistungen, Informationen und Produkten durch einen Interessenten, zusätzlich zur Identifizierung des betreffenden Interessenten auch eine Identifizierung des betreffenden Anbieters in den Billingbeleg eingefügt werden kann. Die Identifizierung des betreffenden Interessenten oder Anbieters ist beispielsweise eine oben erwähnte IMSI, eine MSISDN-Nummer oder eine andere Kennung des betreffenden Benutzers, die vorzugsweise im Identifizierungsmodul 31, 41 gespeichert ist.

Der Anbietervermittlungsserver 1 kann die empfangenen Billingbelege zu CDR-Belegen (Call Detail Records) aufarbeiten und CDR-Belege gemäss herkömmlichen Clearingabläufen zur Verrechnung über einen Netzbetreiber des Kommunikationsnetzes 2 an den betreffenden Benutzer, das heisst den betreffenden Interessenten oder Anbieter, übertragen. Kostenpflichtige Leistungen können aber auch direkt auf einem Konto auf der Identifizierungskarte 31, 41 belastet werden, beispielsweise auf ein vorausbezahltes Konto. Falls die Kommunikationsendgeräte 3, 4 jeweils mit einer zusätzlichen Aufnahmestelle für weitere Karten ausgerüstet sind, beispielsweise Chipkarten, zum Beispiel eine Kreditkarte oder Bankkarte, können kostenpflichtige Leistungen auch direkt auf einem Konto dieser Chipkarten belastet werden.

Die vorliegende Erfindung ermöglicht einer Vielzahl von mobilen und/oder festen Anbietern, sich mit Interessenten zu verbinden, die Teilnehmer in verschiedenen Kommunikationsnetzen sein können, beispielsweise Teilnehmer in verschiedenen Mobilfunknetzen, die von verschiedenen Betreibern betrieben werden.

## Patentansprüche

1. Verfahren zur Vermittlung von Anbietern an Interessenten, in welchem Verfahren für eine Vielzahl von Anbietern jeweils Anbieterprofildaten (111) und zugeordnete Angebotsdaten (112) in einem vernetzten Anbietervermittlungsserver (1) gespeichert werden, in welchem Verfahren gewisse der Anbieterprofildaten (111) und/oder Angebotsdaten (112) durch den Anbietervermittlungsserver (1) an Kommunikationsendgeräte (3) der Interessenten übermittelt werden, die mittels diesen Kommunikationsendgeräten (3) über ein Kommunikationsnetz (2) auf den Anbietervermittlungsserver (1) zugreifen, **dadurch gekennzeichnet,**
**dass** sich mindestens gewisse der Anbieter jeweils mittels eines Mobilendgeräts (4) beim Anbietervermittlungsserver (1) registrieren, wobei durch Registriermittel (45) im Mobilendgerät (4) des betreffenden Anbieters automatisch ein Registrierungsbeleg generiert und über ein Kommunikationsnetz (2) an den Anbietervermittlungsserver (1) übermittelt wird, welcher Registrierungsbeleg eine Anbieteridentifizierung umfasst, die einem Identifizierungsmodul des Mobilendgeräts (4) entnommen wird, und welcher Registrierungsbeleg den Wert der aktuellen geografischen Position des Mobilendgeräts (4) umfasst, die durch Positionsbestimmungsmittel (44) des Mobilendgeräts (4) bestimmt wird, und
**dass** die Anbieteridentifizierung und der Wert der aktuellen geografischen Position im Anbietervermittlungsserver (1) als Teil der Anbieterprofildaten (111) des betreffenden Anbieters gespeichert werden.

2. Verfahren gemäss Anspruch 1, **dadurch gekennzeichnet, dass** der an den Anbietervermittlungsserver (1) übermittelte Wert der aktuellen geografischen Position des Mobilendgeräts (4), im Mobilendgerät (4) gespeichert wird, dass der gespeicherte Wert periodisch mit dem Wert der durch die Positionsbestimmungsmittel (44) erneut bestimmten aktuellen geografischen Position des Mobilendgeräts (4) verglichen wird, und dass ab einem vordefinierten Distanzwert zwischen dem gespeicherten und dem erneut bestimmten Wert der geografischen Position, der Wert der erneut bestimmten geografischen Position an den Anbietervermittlungsserver (1) übermittelt und im Mobilendgerät (4) gespeichert wird.

3. Verfahren gemäss Anspruch 1, **dadurch gekennzeichnet, dass** zusätzlich zum Wert der aktuellen geografischen Position des Mobilendgeräts (4) eine Angabe über die zeitliche Gültigkeit dieses Werts an den Anbietervermittlungsserver (1) übermittelt und dort gespeichert wird.

4. Verfahren gemäss einem der Ansprüche 1 bis 3, **dadurch gekennzeichnet, dass** beim Zugriff durch Interessenten auf den Anbietervermittlungsserver (1) jeweils der Wert der aktuellen geografischen Position des betreffenden Interessenten an den Anbietervermittlungsserver (1) übermittelt wird, und dass die Anbieterprofildaten (111) und/oder Angebotsdaten (112), die durch den Anbietervermittlungsserver (1) an das Kommunikationsendgerät (3) des betreffenden Interessenten übermittelt werden, durch den Anbietervermittlungsserver (1) unter Berücksichtigung des Werts der aktuellen geografischen Position des betreffenden Interessenten und der gespeicherten Werte der geografischen Positionen der Anbieter bestimmt werden.

5. Verfahren gemäss einem der Ansprüche 1 bis 4, **dadurch gekennzeichnet, dass** die Registriermittel (45) jeweils in Form eines ausführbaren Programms in das Mobilendgerät (4) geladen werden, dass im Mobilendgerät (4) mittels kryptographischen Mitteln (46) aus Kenndaten des ausführbaren Programms und/oder aus dem Programmcode des ausführbaren Programms ein digitales Zertifikat generiert und abgespeichert wird, dass zur Detektion von Manipulationen am ausführbaren Programm das digitale Zertifikat durch die kryptographischen Mittel (46) erneut bestimmt und die Übereinstimmung des erneut bestimmten digitalen Zertifikats mit dem abgespeicherten digitalen Zertifikat überprüft wird.

6. System für die Vermittlung von Anbietern an Interessenten, welches System einen vernetzten Anbietervermittlungsserver (1) umfasst, in dem für eine Vielzahl von Anbietern jeweils Anbieterprofildaten (111) und zugeordnete Angebotsdaten (112) gespeichert sind, welches System eine Vielzahl von Kommunikationsendgeräten (3, 4) umfasst, die über ein Kommunikationsnetz (2) mit dem Anbietervermittlungsserver (1) verbindbar sind, so dass gewisse der Anbieterprofildaten (111) und/oder Angebotsdaten (112) durch den Anbietervermittlungsserver (1) an die Kommunikationsendgeräte (3, 4) übermittelbar sind, wenn Interessenten mittels der Kommunikationsendgeräte (3, 4) über das Kommunikationsnetz (2) auf den Anbietervermittlungsserver (1) zugreifen, **dadurch gekennzeichnet,**
**dass** das System eine Vielzahl von Mobilendgeräten (4) umfasst, die jeweils ein Identifizierungsmodul (41) umfassen und über Positionsbestimmungsmittel (44) und Registriermittel (45) verfügen, welche Positionsbestimmungsmittel (44) so eingerichtet sind, dass sie den Wert der aktuellen geografischen Position des betreffenden Mobilendgeräts (4) bestimmen, und welche Registriermittel (45) so eingerichtet sind, dass sie für Anbieter, die sich mittels eines der Mobilendgeräte (4) beim Anbietervermittlungsserver (1) registrieren, automatisch einen Registrierungsbeleg generieren und über ein Kommunikationsnetz (2) an den Anbietervermittlungsserver (1) übermitteln, welcher Registrierungsbeleg eine Anbieteridentifizierung umfasst, die dem Identifizierungsmodul (41) des Mobilendgeräts (4) des betreffenden Anbieters entnommen wird, und welcher Registrierungsbeleg den bestimmten Wert der aktuellen geografischen Position des Mobilendgeräts (4) umfasst, und
**dass** der Anbietervermittlungsserver (1) so eingerichtet ist, dass er die Anbieteridentifizierung und den Wert der aktuellen geografischen Position im Anbietervermittlungsserver (1) als Teil der Anbieterprofildaten (111) des betreffenden Anbieters speichert.

7. System gemäss Anspruch 6, **dadurch gekennzeichnet, dass** die Registriermittel so eingerichtet sind, dass sie den an den Anbietervermittlungsserver (1) übermittelten Wert der aktuellen geografischen Position des Mobilendgeräts (4), im Mobilendgerät (4) speichern, dass sie den gespeicherten Wert periodisch mit dem Wert der durch die Positionsbestimmungsmittel (44) erneut bestimmten aktuellen geografischen Position des Mobilendgeräts (4) vergleichen, und dass sie ab einem vordefinierten Distanzwert zwischen dem gespeicherten und dem erneut bestimmten Wert der geografischen Position, den Wert der erneut bestimmten geografischen Position an den Anbietervermittlungsserver (1) übermitteln und im Mobilendgerät (4) speichern.

8. System gemäss Anspruch 6, **dadurch gekennzeichnet, dass** die Registriermittel (45) so eingerichtet sind, dass sie zusätzlich zum Wert der aktuellen geografischen Position des Mobilendgeräts (4) eine Angabe über die zeitliche Gültigkeit dieses Werts an den Anbietervermittlungsserver (1) übermitteln, und dass der Anbietervermittlungsserver (1) so eingerichtet ist, dass er empfangene Angaben über die zeitliche Gültigkeit dem betreffenden Wert der aktuellen geografischen Position des Mobilendgeräts (4) zugeordnet abspeichert.

9. System gemäss einem der Ansprüche 6 bis 8, **dadurch gekennzeichnet, dass** die Kommunikationsendgeräte (3) der Interessenten über Positionsbestimmungsmittel (34) verfügen, mittels welchen Positionsbestimmungsmitteln (34) der Wert der aktuellen geografischen Position eines betreffenden Interessenten zur Übermittlung an den Anbietervermittlungsserver (1) bestimmt wird, und dass der Anbietervermittlungsserver (1) so eingerichtet ist, dass er die an das Kommunikationsendgerät (3) des betreffenden Interessenten zu übermittelnden Anbieterprofildaten (111) und/oder Angebotsdaten (112) unter Berücksichtigung des Werts der aktuellen geografischen Position des betreffenden Interessenten und der gespeicherten Werte der geografischen Positionen der Anbieter bestimmt.

10. System gemäss einem der Ansprüche 6 bis 9, **dadurch gekennzeichnet, dass** die Registriermittel (45) jeweils ein ausführbares Programm umfassen, das in die Mobilendgeräte (4) ladbar ist, dass die Mobilendgeräte (4) jeweils kryptographische Mittel (46) umfassen, um aus Kenndaten des ausführbaren Programms und/oder aus dem Programmcode des ausführbaren Programms ein digitales Zertifikat zu generieren und abzuspeichern, und dass die Mobilendgeräte (4) so eingerichtet sind, dass sie zur Detektion von Manipulationen am ausführbaren Programm das digitale Zertifikat mittels der kryptographischen Mittel (46) erneut bestimmen und die Übereinstimmung des erneut bestimmten digitalen Zertifikats mit dem abgespeicherten digitalen Zertifikat überprüfen.
